# EUROPEAN PATENT APPLICATION

(11) **EP 4 769 668 A1**
(43) Date of publication of application: **01.07.2026**
(21) Application number: 25797703.3
(22) Date of filing: 29.04.2025
(51) Int. Cl.: H01M 10/6568, H01M 10/6556, H01M 10/613, H01M 10/617

(54) **PACK HOUSING**

(30) Priority: 03.05.2024 KR 20240059299
(71) Applicant: LG Energy Solution, Ltd., Seoul 07335 (KR)
(72) Inventor: HAN, Nyeon Gu, Daejeon 34122 (KR); KIM, Dae Gil, Daejeon 34122 (KR); KIM, Ki Young, Daejeon 34122 (KR); KIM, Young Man, Daejeon 34122 (KR); JANG, Jun Ho, Daejeon 34122 (KR)
(74) Representative: Plasseraud IP
(86) International application number: PCT/KR2025/005757
(87) International publication number: WO 2025/230268

(57) **Abstract**

Example embodiments provide a pack housing. The pack housing includes a first cooling plate including a first cooling channel extending in a first direction and first and second vias connected to the first cooling channel, a second cooling plate including a plurality of second cooling channels extending in the first direction and third and fourth vias connected to the second cooling channel, and a refrigerant coupler between the first and second cooling plates, and the refrigerant coupler includes a first distribution port connected to the first via, a second distribution port connected to the second via, a third distribution port connected to the third via, and a fourth distribution port connected to the fourth via.

## Description

### [Technical Field]

The present disclosure relates to a pack housing. The present application claims the benefit of priority based on Korean Patent Application No. 10-2024-0059299, filed on May 3, 2024, and the entire contents of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### [Disclosure]

### [Technical Problem]

The present disclosure is directed to providing a pack housing with improved cooling efficiency.

### [Technical Solution]

Embodiments of the present disclosure provide a pack housing. The pack housing includes a first cooling plate including a first cooling channel extending in a first direction and first and second vias connected to the first cooling channel, a second cooling plate including a plurality of second cooling channels extending in the first direction and third and fourth vias connected to the second cooling channel, and a refrigerant coupler between the first and second cooling plates, and the refrigerant coupler includes a first distribution port connected to the first via, a second distribution port connected to the second via, a third distribution port connected to the third via, and a fourth distribution port connected to the fourth via.

The refrigerant coupler may further include first distribution channels connected to each of the first distribution port and the third distribution port, and second distribution channels connected to each of the second distribution port and the fourth distribution port.

Each of the first distribution channels may include a first part extending in the first direction, a second part extending in a second direction perpendicular to the first direction, and a third part interposed between the first part and the second part and extending in a third direction perpendicular to each of the first and second directions.

Each of the second distribution channels may include a fourth part extending in the first direction, a fifth part extending in the second direction, and a sixth part interposed between the fourth part and the fifth part and extending in the third direction.

The second part and the fifth part may extend in opposite directions.

The first distribution port and the second distribution port may be spaced apart from each other in the first direction, and the third distribution port and the fourth distribution port may be spaced apart from each other in the first direction.

The first distribution port and the third distribution port may be spaced apart from each other in the first direction, and the second distribution port and the fourth distribution port may be spaced apart from each other in the first direction.

The first distribution port may overlap the fourth distribution port in the third direction, and the third distribution port may overlap the second distribution port in the third direction.

The refrigerant coupler may include a first port connected to the first and third distribution ports and a second port connected to the second and fourth distribution ports.

The first cooling plate may further include an end piece having a rod shape and extending in the first direction, and the end piece may include a blocking protrusion protruding toward the first cooling channel.

The blocking protrusion may be inserted into the first cooling channel.

The blocking protrusion isolates a part of the first cooling channel connected to the first via and a part of the first cooling channel connected to the second via.

The blocking protrusion may be interposed between the first and second vias.

### [Advantageous Effects]

According to embodiments of the present disclosure, a refrigerant can be provided to two cooling plates facing each other by one refrigerant coupler, thereby improving the assemblability of a pack housing. In addition, directions in which the refrigerant flows through cooling channels of the cooling plates are opposite to each other and thus uniform cooling performance of the entire pack housing can be secured.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a perspective view of a pack housing according to embodiments.
FIG. 2 is a plan view of a first cooling plate.
FIG. 3 is a cross-sectional view taken along line 2I-2I' of FIG. 2.
FIG. 4 is a cross-sectional view taken along line 2II-2II' of FIG. 2.
FIG. 5 illustrates the flow of a refrigerant in the first cooling plate.
FIG. 6 is a plan view of a second cooling plate.
FIG. 7 is a perspective view of a refrigerant coupler according to embodiments.
FIG. 8 is a sectional perspective view of the refrigerant coupler according to embodiments.
FIG. 9 is a cross-sectional view taken along line 7I-7I' of FIG. 7.
FIG. 10 is a cross-sectional view taken along line 7II-7II' of FIG. 7.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

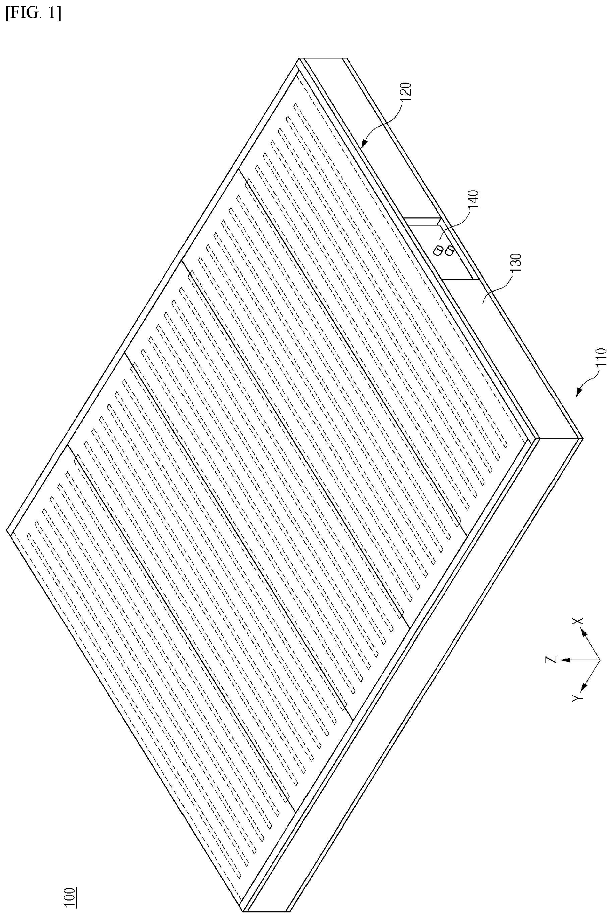

FIG. 1 is a perspective view of a pack housing according to embodiments.

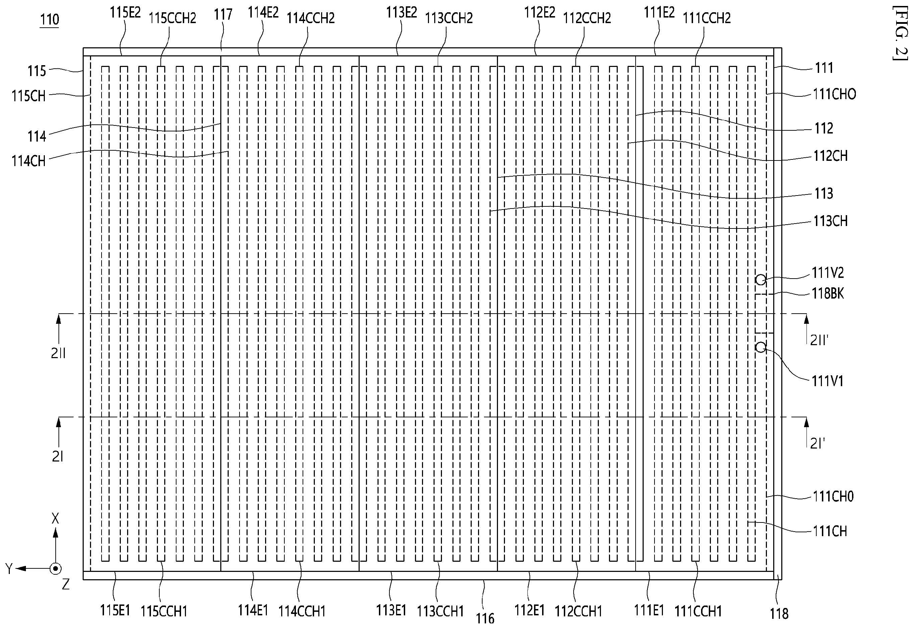

FIG. 2 is a plan view of a first cooling plate.

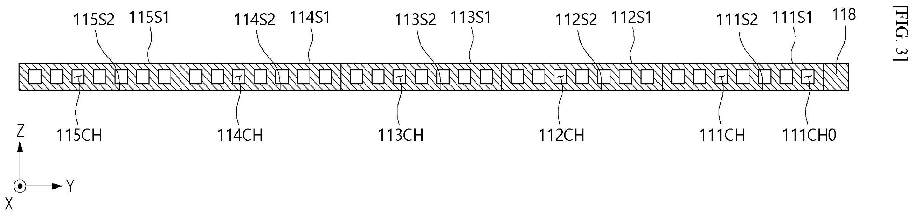

FIG. 3 is a cross-sectional view taken along line 2I-2I' of FIG. 2.

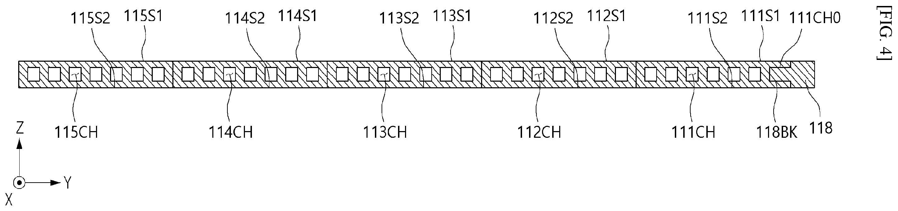

FIG. 4 is a cross-sectional view taken along line 2II-2II' of FIG. 2.

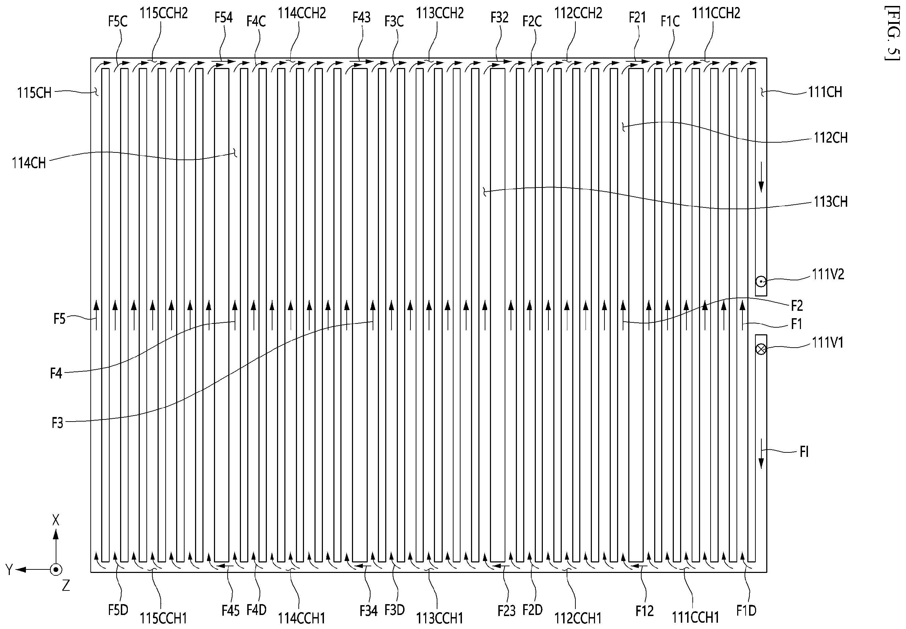

FIG. 5 illustrates the flow of a refrigerant in the first cooling plate.

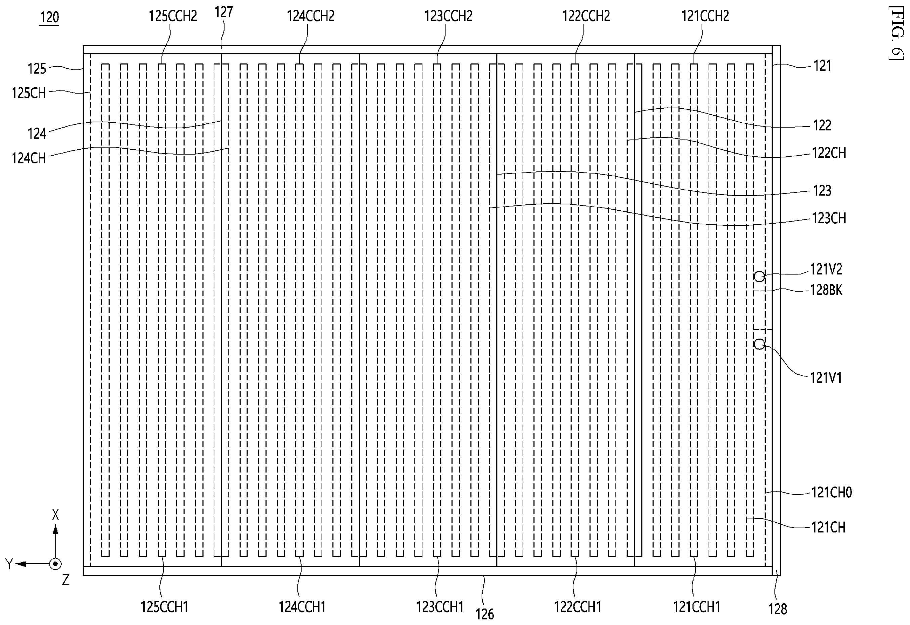

FIG. 6 is a plan view of a second cooling plate.

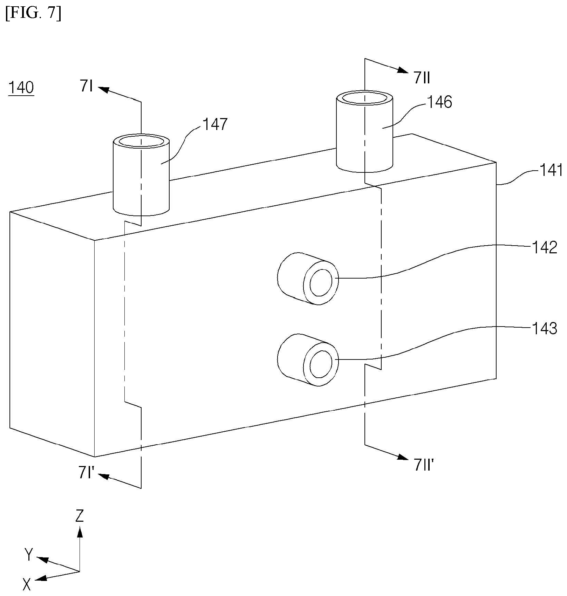

FIG. 7 is a perspective view of a refrigerant coupler according to embodiments.

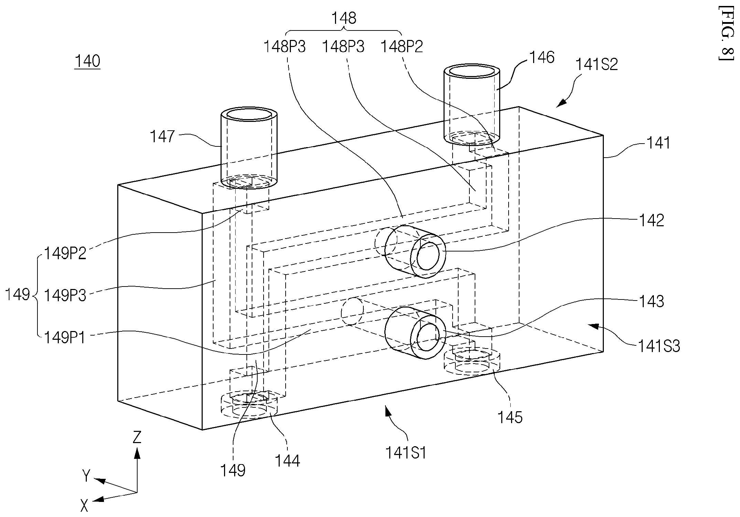

FIG. 8 is a sectional perspective view of the refrigerant coupler according to embodiments.

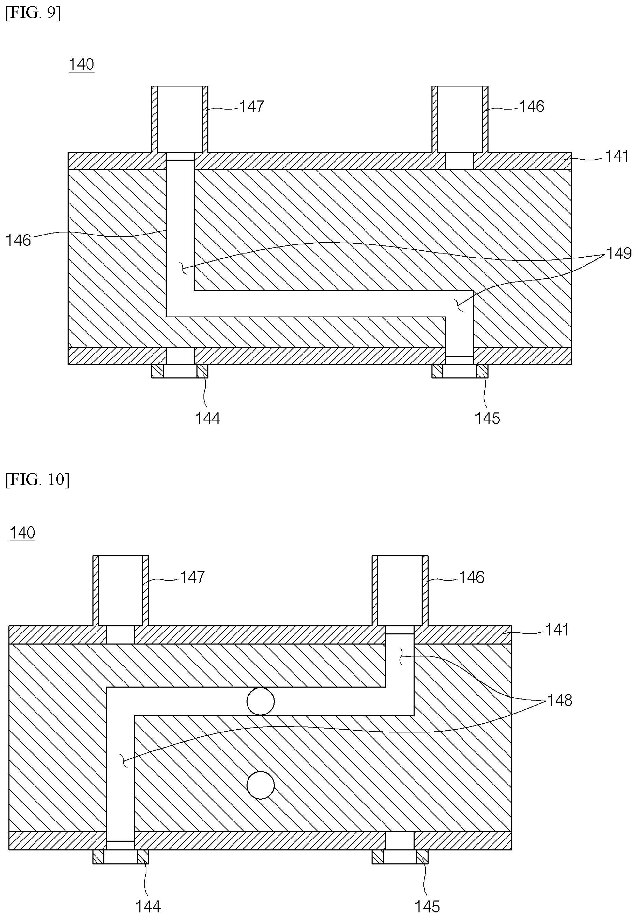

FIG. 9 is a cross-sectional view taken along line 7I-7I' of FIG. 7.

FIG. 10 is a cross-sectional view taken along line 7II-7II' of FIG. 7.

Referring to FIGS. 1 to 5, a pack housing 100 may provide a space for mounting one or more battery cell assemblies. The pack housing 100 may include a first cooling plate 110, a second cooling plate 120, side walls 130, and a refrigerant coupler 140.

A battery cell assembly may include a plurality of battery cells, bus bars configured to output voltages of the plurality of battery cells, and an integrated circuit configured to monitor electrical parameters (e.g., voltages and currents) of the plurality of battery cells.

The first cooling plate 110 may include a plurality of first to fifth plates 111, 112, 113, 114 and 115 and end pieces 116, 117 and 118. The first plate 111 may include a cooling surface 111S1 and a support surface 111S2. The cooling surface 111S1 and the support surface 111S2 may be opposite to each other. The second plate 112 may include a cooling surface 112S1 and a support surface 112S2. The cooling surface 112S1 and the support surface 112S2 may be opposite to each other. The third plate 113 may include a cooling surface 113S1 and a support surface 113S2. The cooling surface 113S1 and the support surface 113S2 may be opposite to each other. The fourth plate 114 may include a cooling surface 114S1 and a support surface 114S2. The cooling surface 114S1 and the support surface 114S2 may be opposite to each other. The fifth plate 115 may include a cooling surface 115S1 and a support surface 115S2. The cooling surface 115S1 and the support surface 115S2 may be opposite to each other.

The cooling surfaces 111S1, 112S1, 113S1, 114S1, and 115S1 may be substantially parallel to one another. The cooling surfaces 111S1, 112S1, 113S1, 114S1, and 115S1 may be at the same level. The cooling surfaces 111S1, 112S1, 113S1, 114S1, and 115S1 may be coplanar.

The support surfaces 111S2, 112S2, 113S2, 114S2, and 115S2 may be substantially parallel to one another. Each of the support surfaces 111S2, 112S2, 113S2, 114S2, and 115S2 may be parallel to each of the cooling surfaces 111S1, 112S1, 113S1, 114S1, and 115S1. The support surfaces 111S2, 112S2, 113S2, 114S2, and 115S2 may be at the same level. The support surfaces 111S2, 112S2, 113S2, 114S2, and 115S2 may be coplanar.

Two directions substantially parallel to each of the cooling surfaces 111S1, 112S1, 113S1, 114S1, and 115S1 will be defined as an X-axis direction and a Y-axis directions, and a direction substantially perpendicular to each of the cooling surfaces 111S1, 112S1, 113S1, 114S1, and 115S1 will be defined as a Z-axis direction. The X-axis direction, the Y-axis direction, and the Z-axis direction may be substantially perpendicular to one another. Unless otherwise mentioned, the definition of the directions will apply to the following drawings.

Each of the plates 111, 112, 113, 114 and 115 may be provided by an extrusion process. An extrusion direction of each of the first to fifth plates 111, 112, 113, 114, and 115 may be the X-axis direction. That is, a YZ cross-section of each of a center plate 111 and the first to fifth plates 111, 112, 113, 114, and 115 may be constant according to a position in the X-axis direction except for deformation due to additional tooling. Here, the YZ cross-section may be substantially parallel to the Y-axis direction and the Z-axis direction and be substantially perpendicular to the X-axis direction.

In an example of the additional tooling, connection channels 111CCH1, 111CH2, 112CH1, 112CH2, 113CH1, 113CH2, 114CH1, 114CH2, 115CH1 and 115CH2 and first and second vias 111V1 and 111V2 may be provided.

The elements referred to above as the channels and/or the vias may be empty spaces in the first to fifth plates 111, 112, 113, 114, and 115 that allow a refrigerant to flow therethrough. Accordingly, that the channels and/or the vias are connected to each other should be understood to mean that the flow of a fluid between them is allowable. For example, because first cooling channels 111CH and the connection channels 111CCH1 and 111CH2 are connected, the flow of a fluid between the connection channels 111CCH1 and 111CH2 and the first cooling channels 111CH is allowable.

The first to fifth plates 111, 112, 113, 114, and 115 may be sequentially arranged in the Y-axis direction. The third plate 113 may be interposed between the second and fourth plates 112 and 114. The second plate 112 may be interposed between the first and third plates 111 and 113. The fourth plate 114 may be interposed between the third and fifth plates 113 and 115. The first to fifth plates 111, 112, 113, 114, and 115 may be coupled to each other by friction stir welding. Accordingly, there may be welded surfaces between the first and second plates 111 and 112, between the second and third plates 112 and 113, between the third and fourth plates 113 and 114, and between the fourth and fifth plates 114 and 115.

However, the present disclosure is not limited thereto, and the first to fifth plates 111, 112, 113, 114, and 115 may be coupled to one another by arc welding, laser welding, electron beam welding, friction welding, ultrasonic welding or the like.

The first plate 111 may include first cooling channels 111CH0 and 111CH. Each of the first cooling channels 111CH0 and 111CH may extend in the X-axis direction. Each of the first cooling channels 111CH0 and 111CH may provide a passage through which a refrigerant flows. The first cooling channels 111CH0 and 111CH may be arranged in the Y-axis direction. The first cooling channels 111CH0 and 111CH may be spaced apart from each other in the Y-axis direction.

A length of each of the first cooling channels 111CH0 and 111CH in the X-axis direction may be substantially the same as a length of the first plate 111 in the X-axis direction. Each of the first cooling channels 111CH0 and 111CH may be spaced apart from the cooling surface 111S1 and the support surface 111S2 of the first plate 111. Each of the first cooling channels 111CH0 and 111CH may be interposed between the cooling surface 111S1 and the support surface 111S2 of the first plate 111.

The second plate 112 may include second cooling channels 112CH. Each of the second cooling channels 112CH may extend in the X-axis direction. Each of the second cooling channels 112CH may provide a passage through which the refrigerant flows. The second cooling channels 112CH may be arranged in the Y-axis direction. The second cooling channels 112CH may be spaced apart from each other in the Y-axis direction.

A length of each of the second cooling channels 112CH in the X-axis direction may be substantially the same as a length of the second plate 112 in the X-axis direction. Each of the second cooling channels 112CH may be spaced apart from the cooling surface 112S1 and the support surface 112S2 of the second plate 112. Each of the second cooling channels 112CH may be interposed between the cooling surface 112S1 and the support surface 112S2 of the second plate 112.

The third plate 113 may include third cooling channels 113CH. Each of the third cooling channels 113CH may extend in the X-axis direction. Each of the third cooling channels 113CH may provide a passage through which the refrigerant flows. The third cooling channels 113CH may be arranged in the Y-axis direction. The third cooling channels 113CH may be spaced apart from each other in the Y-axis direction.

A length of each of the third cooling channels 113CH in the X-axis direction may be substantially the same as a length of the third plate 113 in the X-axis direction. Each of the third cooling channels 113CH may be spaced apart from the cooling surface 113S1 and the support surface 113S2 of the third plate 113. Each of the third cooling channels 113CH may be interposed between the cooling surface 113S1 and the support surface 113S2 of the third plate 113.

The fourth plate 114 may include fourth cooling channels 114CH. Each of the fourth cooling channels 114CH may extend in the X-axis direction. Each of the fourth cooling channels 114CH may provide a passage through which the refrigerant flows. The fourth cooling channels 114CH may be arranged in the Y-axis direction. The fourth cooling channels 114CH may be spaced apart from each other in the Y-axis direction.

A length of each of the fourth cooling channels 114CH in the X-axis direction may be substantially the same as a length of the fourth plate 114 in the X-axis direction. Each of the fourth cooling channels 114CH may be spaced apart from the cooling surface 114S1 and the support surface 114S2 of the fourth plate 114. Each of the fourth cooling channels 114CH may be interposed between the cooling surface 114S1 and the support surface 114S2 of the fourth plate 114.

The fifth plate 115 may include fifth cooling channels 115CH. Each of the fifth cooling channels 115CH may extend in the X-axis direction. Each of the fifth cooling channels 115CH may provide a passage through which the refrigerant flows. The fifth cooling channels 115CH may be arranged in the Y-axis direction. The fifth cooling channels 115CH may be spaced apart from each other in the Y-axis direction.

A length of each of the fifth cooling channels 115CH in the X-axis direction may be substantially the same as a length of the fifth plate 115 in the X-axis direction. Each of the fifth cooling channels 115CH may be spaced apart from the cooling surface 115S1 and the support surface 115S2 of the fifth plate 115. Each of the fifth cooling channels 115CH may be interposed between the cooling surface 115S1 and the support surface 115S2 of the fifth plate 115.

The first plate 111 may include the connection channels 111CCH1 and 111CCH2. The connection channels 111CCH1 may be spaced apart from the connection channels 111CCH2 in the X-axis direction. The connection channels 111CCH1 and 111CCH2 may extend in the Y-axis direction. The connection channels 111CCH1 and 111CCH2 may connect the first cooling channels 111CH0 and 111CH. The connection channels 111CCH1 may be adjacent to a first end portion 111E1 of the first plate 111 in the X-axis direction. The connection channels 111CCH2 may be adjacent to a second end portion 111E2 of the first plate 111 in the X-axis direction.

The first plate 111 may include the first and second vias 111V1 and 111V2. Each of the first and second vias 111V1 and 111V2 may extend in the Z-axis direction. The first and second vias 111V1 and 111V2 may be spaced apart from each other in the X-axis direction. In the X-axis direction, a blocking protrusion 118BK of the end piece 118 may be interposed between the first and second vias 111V1 and 111V2.

The first and second vias 111V1 and 111V2 may be connected to the first cooling channel 111CH0. Among the first cooling channels 111CH0 and 111CH, the first cooling channel 111CH0 connected to the first and second vias 111V1 and 111V2 may be closest to the end piece 118. The refrigerant introduced from the refrigerant coupler 140 may be introduced into the first cooling channels 111CH0 through the first via 111V1, flow through the first cooling plate 110, converge in the first cooling channels 111CH0, and be discharged to the refrigerant coupler through the second via 111V2.

According to embodiments, the blocking protrusion 118BK of the end piece 118 may be inserted into the first cooling channel 111CH0. The blocking protrusion 118BK may isolate a portion of the first cooling channel 111CH0 connected to the first via 111V1 and a portion of the first cooling channel 111CH0 connected to the second via 111V2, thereby preventing interference between the refrigerant flowing through the first via 111V1 and the refrigerant discharged through the second via 111V2.

The second plate 112 may include connection channels 112CCH1 and 112CCH2. The connection channels 112CCH1 may be spaced apart from the connection channels 112CCH2 in the X-axis direction. The connection channels 112CCH1 and 112CCH2 may extend in the Y-axis direction. The connection channels 112CCH1 and 112CCH2 may connect the second cooling channels 112CH. The connection channels 112CCH2 may be adjacent to a first end portion 112E1 of the second plate 112 in the X-axis direction. The connection channels 112CCH1 may be adjacent to a second end portion 112E2 of the second plate 112 in the X-axis direction.

The third plate 113 may include connection channels 113CCH1 and 113CCH2. The connection channels 113CCH1 may be spaced apart from the connection channels 113CCH2 in the X-axis direction. The connection channels 113CCH1 and 113CCH2 may extend in the Y-axis direction. The connection channels 113CCH1 and 113CCH2 may connect the third cooling channels 113CH. The connection channels 113CCH2 may be adjacent to a first end portion 113E1 of the third plate 113 in the X-axis direction. The connection channels 113CCH1 may be adjacent to a third end portion 113E2 of the third plate 113 in the X-axis direction.

The fourth plate 114 may include connection channels 114CCH1 and 114CCH2. The connection channels 114CCH1 may be spaced apart from the connection channels 114CCH2 in the X-axis direction. The connection channels 114CCH1 and 114CCH2 may extend in the Y-axis direction. The connection channels 114CCH1 and 114CCH2 may connect the fourth cooling channels 114CH. The connection channels 114CCH2 may be adjacent to a first end portion 114E1 of the fourth plate 114 in the X-axis direction. The connection channels 114CCH1 may be adjacent to a fourth end portion 114E2 of the fourth plate 114 in the X-axis direction.

The fifth plate 115 may include connection channels 115CCH1 and 115CCH2. The connection channels 115CCH1 may be spaced apart from the connection channels 115CCH2 in the X-axis direction. The connection channels 115CCH1 and 115CCH2 may extend in the Y-axis direction. The connection channels 115CCH1 and 115CCH2 may connect the fifth cooling channels 115CH. The connection channels 115CCH2 may be adjacent to a first end 115E1 of the fifth plate 115 in the X-axis direction. The connection channels 115CCH1 may be adjacent to a fifth end 115E2 of the fifth plate 115 in the X-axis direction.

The connection channels 111CCH1, 112CH1, 113CH1, 114CH1, and 115CH1 may be arranged in the Y-axis direction. The connection channels 111CCH1, 112CH1, 113CH1, 114CH1, and 115CH1 may be aligned in the Y-axis direction. The connection channels 111CCH1, 112CH1, 113CH1, 114CH1, and 115CH1 may be connected to one another.

The refrigerant introduced into the first cooling channel 111CH0 through the first via V1 may be transmitted to the connection channels 111CCH1, as indicated by an arrow of flow FI. The refrigerant transmitted to the connection channels 111CCH1 may be distributed to the first cooling channels 111CH via the connection channels 111CCH1 as indicated by an arrow of flow F1D or may be transmitted to the connection channels 112CCH1 as indicated by an arrow of flow F12. The refrigerant transmitted to the connection channels 112CCH1 may be distributed to the second cooling channels 112CH as indicated by an arrow of flow F2D or may be transmitted to the connection channels 113CCH1 as indicated by an arrow of flow F23. The refrigerant transmitted to the connection channels 113CCH1 may be distributed to the third cooling channels 113CH as indicated by an arrow of flow F3D or be transmitted to the connection channels 114CCH1 as indicated by an arrow of flow F34. The refrigerant transmitted to the connection channels 114CCH1 may be distributed to the fourth cooling channels 114CH as indicated by an arrow of flow F4D or be transmitted to the connection channels 115CCH1 as indicated by an arrow of flow F45. The refrigerant transmitted to the connection channels 115CCH1 may be distributed to the fifth cooling channels 114CH as indicated by an arrow of flow F5D.

The refrigerant transmitted to the first cooling channels 111CH may flow in the X-axis direction along the first cooling channels 111CH as indicated by the arrow of flow F1. The refrigerant transmitted to the second cooling channels 112CH may flow in the X-axis direction along the second cooling channels 112CH as indicated by the arrow of flow F2. The refrigerant transmitted to the third cooling channels 113CH may flow in the X-axis direction along the third cooling channels 113CH as indicated by the arrow of flow F3. The refrigerant transmitted to the fourth cooling channels 114CH may flow in the X-axis direction along the fourth cooling channels 114CH as indicated by the arrow of flow F4. The refrigerant transmitted to the fifth cooling channels 115CH may flow in the X-axis direction along the fifth cooling channels 115CH as indicated by the arrow of flow F5.

The refrigerant flowing through the fifth cooling channels 115CH may converge in the connection channels 115CCH2 as indicated by an arrow of flow F5C and be transmitted to the connection channels 114CCH2 as indicated by an arrow of flow F54. The refrigerant flowing through the fourth cooling channels 114CH as indicated by an arrow of flow F4C and converging in the connection channels 114CCH2 and the refrigerant transmitted from the connection channels 115CCH2 to the connection channels 114CCH2 as indicated by an arrow of flow F4C may be transmitted to the connection channels 113CCH2. The refrigerant flowing through the third cooling channels 113CH as indicated by an arrow of flow F3C and converging in the connection channels 113CCH2 and the refrigerant transmitted from the connection channels 114CCH2 to the connection channels 113CCH2 as indicated by an arrow of flow F43 may be transmitted to the connection channels 112CCH2. The refrigerant flowing through the second cooling channels 112CH as indicated by an arrow of flow F2C and converging in the connection channels 112CCH2 and the refrigerant transmitted from the connection channels 113CCH2 to the connection channels 112CCH2 as indicated by an arrow of flow F32 may be transmitted to the connection channels 111CCH2. The refrigerant flowing through the first cooling channels 111CH as indicated by an arrow of flow F1C and converging in the connection channels 111CCH2 and the refrigerant transmitted from the connection channels 112CCH2 to the connection channels 111CCH2 as indicated by an arrow of flow F21 may be transmitted to the cooling channel 111CH0. The refrigerant transmitted to the cooling channel 111CH0 may be transmitted to the second via 111V2 as indicated by an arrow of flow FO and be discharged to the outside through the second via 112V2.

As described above, the flow of the refrigerant when the refrigerant is injected through the first via V1 and discharged through the second via V2 has been described above, and vice versa because the first cooling plate 110 has a roughly symmetrical shape. Based on the description herein, technicians of ordinary skill in the art will be able to easily derive an example in which the refrigerant is injected through the second via V2 and discharged through the first via V1.

The end piece 116 may have a rod shape extending in the Y-axis direction. The end piece 116 may be in contact with the end portions 111E1, 112E1, 113E1, 114E1 and 115E1 of the plurality of plates 111, 112, 113, 114 and 115. The end piece 116 may be coupled to the end portions 111E1, 112E1, 113E1, 114E1 and 115E1 of the plurality of plates 111, 112, 113, 114 and 115. The end piece 116 may be welded to the end portions 111E1, 112E1, 113E1, 114E1 and 115E1 of the plurality of plates 111, 112, 113, 114 and 115.

The end piece 117 may have a rod shape extending in the Y-axis direction. The end piece 117 may be in contact with the end portions 111E2, 112E2, 113E2, 114E2, and 115E2 of the plurality of plates 111, 112, 113, 114, and 115. The end piece 116 may be coupled to the end portions 111E2, 112E2, 113E2, 114E2, and 115E2 of the plurality of plates 111, 112, 113, 114, and 115. The end piece 116 may be welded to the end portions 111E2, 112E2, 113E2, 114E2, and 115E2 of the plurality of plates 111, 112, 113, 114, and 115. Accordingly, a liquid seal may be provided to channels inside the plurality of plates 111, 112, 113, 114, and 115 by the end pieces 116 and 117.

In the present example, a length of each of the end pieces 116 and 117 in the Y-axis direction may be substantially the same as the sum of lengths of the plurality of plates 111, 112, 113, 114, and 115 in the Y-axis direction. As another example, a plurality of end pieces may be provided on the end portions 111E1, 112E1, 113E1, 114E1, and 115E1 and the end portions 111E2, 112E2, 113E2, 114E2, and 115E2, and the length of each of the plurality of end pieces in the Y-axis direction may be less than the sum of the lengths of the plurality of plates 111, 112, 113, 114, and 115 in the Y-axis direction.

The end piece 118 may be coupled to an edge of the first plate 111 parallel to the X-axis direction . The end piece 118 may have a rod shape extending in the X-axis direction. The end piece 118 may include a blocking protrusion 118BK protruding in the Y-axis direction. The blocking protrusion 118BK may protrude toward the first cooling channel 111CH0. The blocking protrusion 118BK may be approximately at the center of the end piece 118 in the X-axis direction but is not limited thereto.

When the blocking protrusion 118BK is approximately at the center of the end piece 118 in the X-axis direction, a length of the cooling channel 111CH0 connected to the first via 111V1 may be substantially the same as a length of the cooling channel 111CH0 connected to the second via 111V2.

When the blocking protrusion 118BK is spaced apart from center of the end piece 118 in the X-axis direction, the length of the cooling channel 111CH0 connected to the first via 111V1 may be different from the length of the cooling channel 111CH0 connected to the second via 111V2.

According to embodiments, the first to fifth cooling channels 111CH1, 111CH2, 111CH3, 111CH4, and 111CH5 of the first to fifth plates 111, 112, 113, 114, and 115 are connected to one another in parallel, thus providing uniform cooling performance of the entire surfaces of the cooling plate 110.

The first and second cooling plates 110 and 120 may be substantially parallel to each other. The side walls 130 may be substantially perpendicular to the first and second cooling plates 110 and 120. The first and second cooling plates 110 and 120 and the side walls 130 may limit an inner space of the pack housing 100 and thus a plurality of battery cell assemblies may be mounted inside the pack housing 100.

Referring to FIGS. 1, 2, and 6, the second cooling plate 120 may include a plurality of first to fifth plates 121, 122, 123, 124, and 125 and end pieces 126, 127, and 128. The first plate 121 may include first cooling channels 121CH0 and 121CH, connection channels 121CCH1 and 121CCH2, and first and second vias 121V1 and 121V2. The second plate 122 may include second cooling channels 122CH and connection channels 122CCH1 and 122CCH2. The third plate 123 may include third cooling channels 123CH and connection channels 123CCH1 and 123CCH2. The fourth plate 124 may include fourth cooling channels 124CH and connection channels 124CCH1 and 124CCH2. The fifth plate 125 may include fifth cooling channels 125CH and connection channels 125CCH1 and 125CCH2. The end piece 128 may include a blocking protrusion 128BK inserted into the first cooling channel 121CH0.

The first plate 121 may be substantially the same as the first plate 111, the second plate 122 may be substantially the same as the second plate 112, the third plate 123 may be substantially the same as the third plate 113, the fourth plate 124 may be substantially the same as the fourth plate 114, and the fifth plate 125 may be substantially the same as the fifth plate 115. The end piece 126 may be substantially the same as the end piece 116, the end piece 127 may be substantially the same as the end piece 117, and the end piece 128 may be substantially the same as the end piece 118. The second cooling plate 120 may be substantially the same as the first cooling plate 110. Accordingly, the description of the flow of the refrigerant in the first cooling plate 110 may also apply to the second cooling plate 120.

The first cooling plate 110 and the second cooling plate 120 may be disposed such that the first and second vias 111V1 and 111V2 and the first and second vias 121V1 and 121V2 face each other and thus may be simultaneously cooled by one refrigerant coupler 140.

Referring to FIGS. 2, 6, and 7 to 10, the refrigerant coupler 140 may include a body 141, first and second ports 142 and 143, first to fourth distribution ports 144, 145, 146 and 147, and distribution channels 148 and 149.

The body 141 may have a roughly block shape. The first and second ports 142 and 143, and the first to fourth distribution ports 144, 145, 146 and 147 may be integrally cast with the body 141 or be coupled to the body 141 by a method such as welding. The body 141 may define the distribution channels 148 and 149.

The body 141 may include first and second surfaces 141S1 and 141S2 substantially perpendicular to the Z-axis direction, and a third surface 141S3 between the first and second surfaces 141S1 and 141S2. The first and second surfaces 141S1 and 141S2 may be opposite to each other. The third surface 141S3 may be substantially perpendicular to the Y-axis direction. The first and second ports 142 and 143 may be on the third surface 141S3. The first and second distribution ports 144 and 145 may be on the first surface 141S1. The third and fourth distribution ports 146 and 147 may be on the second surface 141S2.

The distribution channels 148 may connect the first port 142 to the first and third ports 144 and 146. The distribution channels 148 may each include a first part 148P1 extending in the X-axis direction, a second part 148P2 extending in the Y-axis direction, and a third part 148P3 interposed between the first and second parts148P1 and 148P2 and extending in the Z-axis direction.

The distribution channels 149 may connect the first port 143 to the second and fourth ports 145 and 147. The distribution channels 149 may each include a first part 149P1 extending in the X-axis direction, a second part 149P2 extending in the Y-axis direction, and a third part 149P3 interposed between the first and second parts149P1 and 149P2 and extending in the Z-axis direction.

The second part 148P2 of each of the distribution channels 148 and the second part 149P2 of each of the distribution channels 149 may extend in opposite directions. Accordingly, the distribution channels 148 and 149 may be connected to the first to fourth distribution ports 144, 145, 146, and 147 while avoiding each other. The extension of the second part 148P2 and the second part 149P2 in the opposite directions should be understood to mean that a distance between the second parts 148P2 and the third surface 141S3 increases as a distance to the first and third distribution ports 144 and 146 decreases, and a distance between the second parts 149P2 and the third surface 141S3 decreases as a distance to the second and fourth distribution ports 145 and 147 decreases.

The first distribution port 144 may be connected to the first via 111V1, the second distribution port 145 may be connected to the second via 111V2, the third distribution port 146 may be connected to the first via 121V1, and the fourth distribution port 147 may be connected to the second via 121V2.

The first distribution port 144 may be spaced apart from the second distribution port 145 in the X-axis direction. The first distribution port 144 may overlap the second distribution port 145 in the X-axis direction. The third distribution port 146 may be spaced apart from the fourth distribution port 147 in the X-axis direction. The third distribution port 146 may overlap the fourth distribution port 147 in the X-axis direction.

The first distribution port 144 may be spaced apart from the fourth distribution port 147 in the Z-axis direction. The first distribution port 144 may overlap the fourth distribution port 147 in the Z-axis direction. The second distribution port 145 may be spaced apart from the third distribution port 146 in the Z-axis direction. The second distribution port 145 may overlap the third distribution port 146 in the Z-axis direction.

According to embodiments, the refrigerant in the first to fifth cooling channels 111CH, 112CH, 113CH, 114CH and 115CH of the first cooling plate 110 may flow in a direction opposite to a direction of flow of the refrigerant in the first to fifth cooling channels 121CH, 122CH, 123CH, 124CH, and 125CH of the cooling plate 120, and the entire pack housing 100 may be uniformly cooled.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A pack housing comprising:
a first cooling plate including a first cooling channel extending in a first direction and first and second vias connected to the first cooling channel;
a second cooling plate including a plurality of second cooling channels extending in the first direction and third and fourth vias connected to the second cooling channel; and
a refrigerant coupler between the first and second cooling plates,
wherein the refrigerant coupler includes a first distribution port connected to the first via, a second distribution port connected to the second via, a third distribution port connected to the third via, and a fourth distribution port connected to the fourth via.

2. The pack housing of claim 1, wherein the refrigerant coupler further includes first distribution channels connected to each of the first distribution port and the third distribution port, and second distribution channels connected to each of the second distribution port and the fourth distribution port.

3. The pack housing of claim 2, wherein each of the first distribution channels includes a first part extending in the first direction, a second part extending in a second direction perpendicular to the first direction, and a third part interposed between the first part and the second part and extending in a third direction perpendicular to each of the first and second directions.

4. The pack housing of claim 3, wherein each of the second distribution channels includes a fourth part extending in the first direction, a fifth part extending in the second direction, and a sixth part interposed between the fourth part and the fifth part and extending in the third direction.

5. The pack housing of claim 4, wherein the second part and the fifth part extend in opposite directions.

6. The pack housing of claim 3, wherein the first distribution port and the second distribution port are spaced apart from each other in the first direction, and
the third distribution port and the fourth distribution port are spaced apart from each other in the first direction.

7. The pack housing of claim 3, wherein the first distribution port and the third distribution port are spaced apart from each other in the first direction, and
the second distribution port and the fourth distribution port are spaced apart from each other in the first direction.

8. The pack housing of claim 3, wherein the first distribution port overlaps the fourth distribution port in the third direction, and
the third distribution port overlaps the second distribution port in the third direction.

9. The pack housing of claim 2, wherein the refrigerant coupler includes a first port connected to the first and third distribution ports and a second port connected to the second and fourth distribution ports.

10. The pack housing of claim 1, wherein the first cooling plate further includes an end piece having a rod shape and extending in the first direction,
wherein the end piece includes a blocking protrusion protruding toward the first cooling channel.

11. The pack housing of claim 10, wherein the blocking protrusion is inserted into the first cooling channel.

12. The pack housing of claim 10, wherein the blocking protrusion isolates a part of the first cooling channel connected to the first via and a part of the first cooling channel connected to the second via.

13. The pack housing of claim 10, wherein the blocking protrusion is interposed between the first and second vias.
